# EUROPEAN PATENT APPLICATION

(11) **EP 4 391 103 A2**
(43) Date of publication of application: **26.06.2024**
(21) Application number: 23207901.2
(22) Date of filing: 06.11.2023
(51) Int. Cl.: H01M 4/13, H01M 4/139, H01M 4/66, H01M 10/0525, H01M 4/02

(54) **POSITIVE ELECTRODE PLATE, NON-AQUEOUS ELECTROLYTE SECONDARY BATTERY, AND METHOD OF PRODUCING A POSITIVE ELECTRODE PLATE**

(30) Priority: 23.12.2022 JP 2022206962
(71) Applicant: Prime Planet Energy & Solutions, Inc., Chuo-ku Tokyo 103-0022 (JP)
(72) Inventor: MAEDA, Kazuhiro, Tokyo, 103-0022 (JP); IKEDA, Daisuke, Tokyo, 103-0022 (JP); TAKAHASHI, Kentaro, Tokyo, 103-0022 (JP)
(74) Representative: Kuhnen & Wacker Patent- und Rechtsanwaltsbüro PartG mbB

(57) **Abstract**

A positive electrode plate comprises a metal foil, an active material layer including a positive electrode active material on a surface of the metal foil, and a protective layer on the surface of the metal foil. The active material layer and the protective layer are adjacent to each other in a plan view of the positive electrode plate. The protective layer includes a magnesia having a specific surface area of 5.0 m²/g or less.

## Description

### CROSS REFERENCE TO RELATED APPLICATIONS

This nonprovisional application is based on Japanese Patent Application No. 2022-206962 filed on December 23, 2022, with the Japan Patent Office, the entire contents of which are hereby incorporated by reference.

### BACKGROUND OF THE INVENTION

### Field of the Invention

The present invention relates to a positive electrode plate, a non-aqueous electrolyte secondary battery, and a method of producing a positive electrode plate.

### Description of the Background Art

A positive electrode plate that has an active material layer on the surface of a metal foil and also has a protective layer adjacent to a side edge portion of the active material layer is known (see Japanese Patent Laying-Open No. 2022-093839 and Japanese Patent Laying-Open No. 2022-116966, for example).

### SUMMARY OF THE INVENTION

The protective layer is formed by applying a slurry that includes an inorganic filler, to the surface of the metal foil. When magnesia is used as the inorganic filler, the stationary viscosity of the slurry, namely, the viscosity of the slurry when it is stationary, can increase. The increase of the stationary viscosity of the slurry can make it difficult to spread the slurry on the surface of the metal foil, possibly resulting in a defect of the protective layer.

An object of the present disclosure is to provide a method of producing a positive electrode plate where a slurry intended for forming a protective layer has good application properties, and also to provide the positive electrode plate as well as a non-aqueous electrolyte secondary battery comprising the same.
[1] A positive electrode plate comprising:
   a metal foil;
   an active material layer including a positive electrode active material, on a surface of the metal foil; and
   a protective layer on the surface of the metal foil, wherein
   the active material layer and the protective layer are adjacent to each other in a plan view of the positive electrode plate, and
   the protective layer includes a magnesia having a specific surface area of 5.0 m²/g or less.
[2] The positive electrode plate according to [1], wherein the magnesia included in the protective layer has a specific surface area of 4.0 m²/g or less.
[3] The positive electrode plate according to [1] or [2], wherein the protective layer includes the magnesia in an amount from 15 weight% to 25 weight% relative to a total amount of the protective layer.
[4] The positive electrode plate according to any one of [1] to [3], wherein the protective layer further includes a binder.
[5] The positive electrode plate according to any one of [1] to [4], wherein the protective layer further includes a conductive carbon material.
[6] A non-aqueous electrolyte secondary battery comprising the positive electrode plate according to any one of [1] to [5].
[7] A method of producing a positive electrode plate in which method the positive electrode plate is obtained from a positive electrode raw sheet, wherein
   the positive electrode raw sheet comprises a metal foil, an active material layer including a positive electrode active material on a surface of the metal foil, and a protective layer on the surface of the metal foil,
   the active material layer and the protective layer are adjacent to each other in a plan view of the positive electrode raw sheet,
   the method comprises a step (S 1) that involves preparing the positive electrode raw sheet,
   the step (S 1) includes applying a slurry intended for forming the protective layer, to the surface of the metal foil, and
   the slurry includes a magnesia having a specific surface area of 5.0 m²/g or less.
[8] The method of producing a positive electrode plate according to [7], wherein the magnesia included in the slurry has a specific surface area of 4.0 m²/g or less.
[9] The method of producing a positive electrode plate according to [7] or [8], wherein
   the method further comprises a step (S2) that involves cutting the positive electrode raw sheet with a laser, and
   the step (S2) includes cutting the protective layer.
[10] The method of producing a positive electrode plate according to [9], wherein
   the positive electrode plate has an electrode tab, and
   the step (S2) includes forming the electrode tab by cutting the positive electrode raw sheet with the laser.
[11] The method of producing a positive electrode plate according to [9] or [10], wherein the laser is a continuous wave laser.
[12] The method of producing a positive electrode plate according to [11], wherein an output of the continuous wave laser in the step (S2) is from 400 W to 1200 W.
[13] The method of producing a positive electrode plate according to [11] or [12], wherein a scanning rate of the continuous wave laser in the step (S2) is 7660 mm/second or less.

The foregoing and other objects, features, aspects and advantages of the present invention, when taken in conjunction with the accompanying drawings will become more apparent from the following detailed description of the present invention.

### BRIEF DESCRIPTION OF THE DRAWINGS

Fig. 1 is a schematic plan view of an example of a positive electrode plate according to an embodiment of the present disclosure.
Fig. 2 is a schematic plan view of an example of a positive electrode raw sheet according to an embodiment of the present disclosure.
Fig. 3 is a graph of slurry viscosity relative to shear rate.
Fig. 4 is a graph showing a width of a burn of a sample (2) produced in Example(s).
Fig. 5 is a graph showing a width of a burn of a sample (4) produced in Example(s).

### DESCRIPTION OF THE PREFERRED EMBODIMENTS

### (Positive Electrode Plate)

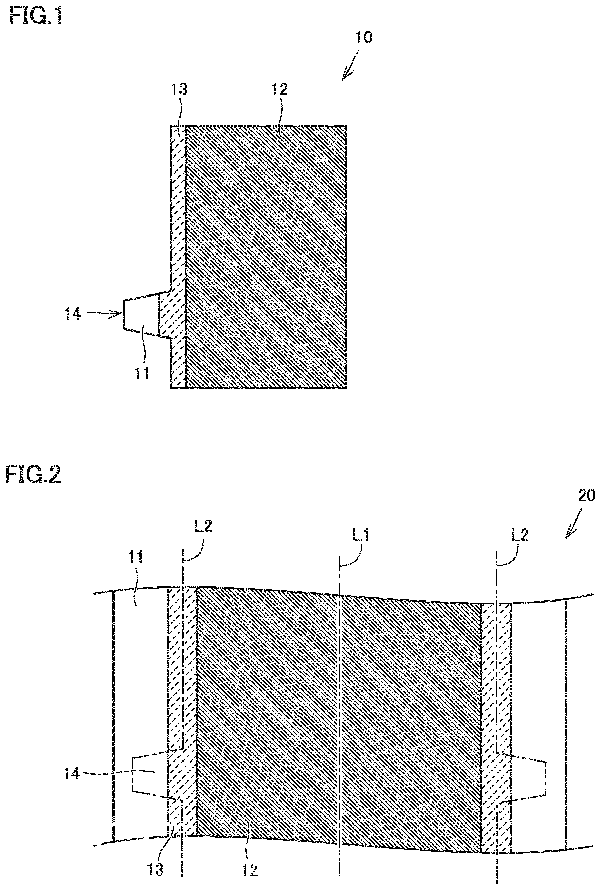

Fig. 1 is a schematic plan view of an example of a positive electrode plate according to an embodiment of the present disclosure. A positive electrode plate 10 can be used in a battery, and, for example, it can be used in a non-aqueous electrolyte secondary battery. Positive electrode plate 10 has a metal foil 11, an active material layer 12 including a positive electrode active material on the surface of metal foil 11, and a protective layer 13 on the surface of metal foil 11, and active material layer 12 and protective layer 13 are adjacent to each other in a plan view of positive electrode plate 10. Active material layer 12 and protective layer 13 may be provided on either one side or both sides of metal foil 11. Positive electrode plate 10 may have an electrode tab 14 that is to serve as a connecting portion connecting to an external terminal (a positive electrode terminal). Electrode tab 14 may be provided so as to protrude outwardly, in a plan view of positive electrode plate 10, from protective layer 13 provided to a side edge portion of positive electrode plate 10 (Fig. 1). Electrode tab 14 may have a region at which the surface of metal foil 11 is exposed, namely, a region at which neither active material layer 12 nor protective layer 13 is formed on the surface of metal foil 11, and it may include a part of protective layer 13.

Metal foil 11 functions as a positive electrode current collector, and, for example, may be formed with the use of an aluminum material such as aluminum and aluminum alloy.

In addition to the positive electrode active material, active material layer 12 may include either a binding material or a conductive aid, or both. Examples of the positive electrode active material include a lithium transition metal oxide of layered type, spinel type, or the like (such as LiNiCoMnO₂, LiNiO₂, LiCoO₂, LiFeO₂, LiMn₂O₄, LiNi_{0.5}Mn_{1.5}O₄, LiCrMnO₄, LiFePO₄, and LiNi_{1/3}Co_{1/3}Mn_{1/3}O₂, for example).

Examples of the binding material include one or more types selected from the group consisting of styrene-butadiene rubber (SBR), polyvinylidene difluoride (PVdF), and polytetrafluoroethylene (PTFE).

Examples of the conductive aid include a carbon material. Examples of the carbon material include one or more types selected from the group consisting of fibrous carbon, carbon black (such as acetylene black, Ketjenblack), coke, and activated carbon. Examples of the fibrous carbon include carbon nanotubes (CNTs). The CNTs may be single-walled carbon nanotubes (SWCNTs), or may be multi-walled carbon nanotubes such as double-walled carbon tubes (DWCNTs).

Protective layer 13 is preferably provided along the side edge of active material layer 12, at the side edge portion of positive electrode plate 10 at which electrode tab 14 is provided. Usually, the electrical conductivity of protective layer 13 is lower than that of metal foil 11 and that of active material layer 12. When protective layer 13 is provided adjacent to active material layer 12, a contact between metal foil 11 of positive electrode plate 10 and a negative electrode active material layer which can be caused by an incident such as breakage of a separator of an electrode assembly included in the battery can be inhibited, leading to a reduced occurrence of an internal short circuit of the battery.

Protective layer 13 includes a magnesia (MgO) having a specific surface area (BET) of 5.0 m²/g or less (hereinafter also called "the present MgO"). The present MgO is preferably in particle form. The specific surface area of the present MgO is preferably 4.5 m²/g or less, more preferably 4.0 m²/g or less, usually 0.5 m²/g or more, and may be 1.0 m²/g or more. The specific surface area of the present MgO may be from 0.5 m²/g to 4.5 m²/g, and may be from 1.0 m²/g to 4.0 m²/g. As described below, protective layer 13 is formed by applying a slurry including the present MgO, to metal foil 11. A slurry, when it has an increased stationary viscosity, tends to be difficult to spread on metal foil 11. In the slurry including the present MgO, an increase of stationary viscosity can be reduced, so the slurry can have excellent application properties and the occurrence of nonuniform application on metal foil 11 can be reduced. With this, it is expected that defects of protective layer 13 formed on metal foil 11 can be reduced.

The specific surface area of the magnesia may be adjusted by controlling the particle size of the magnesia, the calcination temperature and the calcination duration at the time of magnesia production, and/or the like. The specific surface area of the present MgO may be calculated by an adsorption method, which involves having liquid nitrogen adsorbed on the surface of the present MgO and determining the specific surface area from the amount of adsorption.

In addition to the present MgO, protective layer 13 may include either a binder or a conductive carbon material, or both, and it may further include filler particles other than the present MgO. Examples of the binder include one or more types selected from the group consisting of polyimide (PI), polyamide-imide (PAI), and polyvinylidene difluoride (PVdF). Examples of the conductive carbon material include one or more types selected from the group consisting of carbon black (such as acetylene black, Ketjenblack), graphite, carbon nanotubes, carbon nanohorns, graphene, and fullerene. Examples of the filler particles other than the present MgO include electrically insulating filler particles, including, for example, inorganic oxide particles other than the present MgO, nitride particles, metal hydroxide particles, clay mineral particles, glass particles, and the like.

Protective layer 13 preferably includes the present MgO in an amount from 15 weight% to 25 weight%, optionally from 17 weight% to 23 weight%, optionally from 18 weight% to 22 weight%, relative to the total amount of protective layer 13. The content of the binder in protective layer 13 relative to the total amount of protective layer 13 may be from 5 weight% to 60 weight%, or from 10 weight% to 50 weight%. The content of the conductive carbon material in protective layer 13 relative to the total amount of protective layer 13 may be from 0.1 weight% to 10 weight%, or from 1 weight% to 5 weight%. The content of the present MgO relative to the total amount of the filler particles included in protective layer 13 is preferably from 80 weight% to 100 weight%, more preferably from 90 weight% to 100 weight%, optionally from 95 weight% to 100 weight%.

As described below, at the time of producing positive electrode plate 10, when protective layer 13 is cut with a laser, protective layer 13 may be burned. A burn of protective layer 13 may cause erroneous detection at the time of image inspection of positive electrode plate 10, for example. Protective layer 13 according to the present embodiment includes magnesia, and thereby, as compared to a protective layer formed with alumina (Al₂O₃) instead of magnesia, the width of a burn that can occur at the time of laser cutting may be reduced. This may reduce erroneous detection at the time of image inspection of positive electrode plate 10, for example.

### (Method of Producing Positive Electrode Plate)

Fig. 2 is a schematic plan view of an example of a positive electrode raw sheet according to an embodiment of the present disclosure. The method of producing positive electrode plate 10 is a method for obtaining positive electrode plate 10 from a positive electrode raw sheet 20, and it is, for example, a method for producing positive electrode plate 10 as illustrated in Fig. 1 which is explained above. Positive electrode raw sheet 20 has metal foil 11, active material layer 12 including a positive electrode active material on the surface of metal foil 11, and protective layer 13 on the surface of metal foil 11, and active material layer 12 and protective layer 13 are adjacent to each other in a plan view of positive electrode raw sheet 20. As illustrated in Fig. 2, positive electrode raw sheet 20 may be provided with protective layer 13 in a position adjacent to each side edge of active material layer 12, for example. Active material layer 12 and protective layer 13 may be provided on either one side or both sides of metal foil 11. Examples of the material of metal foil 11, active material layer 12, and protective layer 13 include those described above. Positive electrode raw sheet 20 is usually in a belt-like shape, and it has enough length and width for cutting a plurality of positive electrode plates 10 therefrom.

The method of producing positive electrode plate 10 includes a step (S1) that involves preparing positive electrode raw sheet 20. The step (S1) includes a step (S1b) that involves applying a slurry intended for forming protective layer 13, to the surface of metal foil 11, and the slurry includes the present MgO. The slurry thus applied is subjected to drying and/or the like, and thereby protective layer 13 is formed. The specific surface area of the present MgO included in the slurry is within the range described above.

The slurry may be prepared by mixing the present MgO with a dispersion medium. The slurry may further include either a binder or a conductive carbon material, or both. Examples of the binder and the conductive carbon material include those described above. For example, the slurry may be prepared by mixing the binder with the dispersion medium, and adding the present MgO to the resulting mixed liquid and mixing, followed by adding the conductive carbon material and mixing.

The slurry may be applied by a known method, and may be applied with the use of a slot die coater or a roll coater, for example.

The step (S1) may further include a step (S1a) that involves applying a positive electrode slurry including a positive electrode active material intended for forming active material layer 12, to the surface of metal foil 11. Preferably, after the positive electrode slurry thus applied is subjected to drying, compression as needed, and the like to form active material layer 12, the above-described step (S1b) is carried out. In this case, the slurry to be applied in the step (S1b) may be applied to a position adjacent to active material layer 12.

For example, in the method of producing positive electrode plate 10, in order to obtain positive electrode plate 10 from positive electrode raw sheet 20, positive electrode raw sheet 20 is cut along a first cut line L1 and a second cut line L2. First cut line L1 may be defined as a straight line within a region of positive electrode raw sheet 20 at which active material layer 12 is formed, so that, as illustrated in Fig. 2, for example, the width of active material layer 12 (the size thereof in the direction orthogonal to first cut line L1) is divided into two. Second cut line L2 may be defined within a region of positive electrode raw sheet 20 at which protective layer 13 is formed and also within a region at which metal foil 11 is exposed, so that, as illustrated in Fig. 2, for example, a side edge portion of positive electrode plate 10 (at which electrode tab 14 is to be provided) is formed. Cutting positive electrode raw sheet 20 along first cut line L1 and second cut line L2 may be carried out with a laser, a cutting blade, a die, a rotary slitter, a box cutter, and/or the like. The laser may be a continuous wave laser (a CW laser), or may be a pulsed laser. The cutting method used for cutting along first cut line L1 may be the same as, or different from, the cutting method used for cutting along second cut line L2.

The method of producing positive electrode plate 10 includes a step (S2) that involves cutting positive electrode raw sheet 20 with a laser, and the step (S2) preferably includes cutting protective layer 13. The step (S2) may include cutting positive electrode raw sheet 20 with a laser and thereby forming electrode tab 14. At the time of forming electrode tab 14, in positive electrode raw sheet 20, not only protective layer 13 but also the region at which metal foil 11 is exposed may be cut with the laser. The step (S2) may be a step for cutting positive electrode raw sheet 20 along second cut line L2 as illustrated in Fig. 2. Because magnesia has a melting point that is higher than that of alumina, protective layer 13 including the present MgO allows for reducing the width of a burn that can occur at the time of laser cutting, as compared to a protective layer in which alumina is used. This may reduce erroneous detection at the time of image inspection of positive electrode plate 10, for example.

In the step (S2), a CW laser is preferably used. A CW laser has a relatively low peak output as compared to a pulsed laser, so it can inhibit protective layer 13 from being blown away on impact at the time of laser irradiation. The output of the CW laser when it is used in the step (S2) is preferably from 400 W to 1200 W, optionally from 400 W to 1000 W, optionally from 500 W to 800 W, optionally not less than 500 W and less than 700 W, optionally from 500 W to 600 W.

The scanning rate of the CW laser when it is used in the step (S2) is preferably 7660 mm/second or less, optionally from 3000 mm/second to 7500 mm/second, optionally more than 6000 mm/second and not more than 7000 mm/second. The scanning rate refers to the relative moving rate of the positive electrode raw sheet and the laser. When only one of the positive electrode raw sheet and the laser is moved, the moving rate of the one that is moved is the scanning rate. When both the positive electrode raw sheet and the laser are moved in the opposite directions, the sum of the moving rates of the positive electrode raw sheet and the laser is the scanning rate.

Because magnesia has a melting point that is higher than that of alumina, protective layer 13 including the present MgO allows for reducing the occurrence of re-melt-adhesion after laser cutting, as compared to a protective layer in which alumina is used instead of magnesia. As a result, even when the output at the time of cutting with the CW laser is decreased and/or even when the scanning rate is increased to the range described above, it is possible to reduce the occurrence of re-melt-adhesion, achieve good cutting qualities (the machining width of the cut portion, the length of flash, and the width of a burn), and enhance the efficiency in production of positive electrode plate 10. In contrast to this, in the case of a protective layer in which alumina is used, the laser output needs to be 700 W or more, for example, and the scanning rate needs to be 5000 mm/second or less to reduce re-melt-adhesion, and, as a result, it is difficult to lower the laser output or to increase the scanning rate, hindering enhancement in the production efficiency. In the case of a protective layer in which alumina is used, the width of a burn caused by laser cutting is large as described above, and, thereby, cutting qualities of the positive electrode plate tends to be degraded.

When a CW laser is used in the step (S2), the spot diameter of the CW laser may be from 10 µm to 60 µm, or may be from 20 µm to 50 µm, for example.

### (Non-Aqueous Electrolyte Secondary Battery)

A non-aqueous electrolyte secondary battery comprises the above-described positive electrode plate. Usually, the non-aqueous electrolyte secondary battery comprises an electrode assembly and an electrolyte. The non-aqueous electrolyte secondary battery may further include a case for accommodating the electrode assembly and the electrolyte. The electrode assembly has a structure in which a separator is interposed between the active material layer of the positive electrode plate as described above and a negative electrode active material layer of a negative electrode plate. The electrode assembly may be a wound-type electrode assembly, or may be a stack-type electrode assembly. In the non-aqueous electrolyte secondary battery, a bundle of electrode tabs of the positive electrode plate is connected to a positive electrode terminal, and a bundle of electrode tabs of the negative electrode plate is connected to a negative electrode terminal.

The negative electrode plate has a negative electrode active material layer on a negative electrode current collector. For example, the negative electrode current collector is a metal foil made of a copper material such as copper and copper alloy. The negative electrode active material layer includes a negative electrode active material, and may further include either a binding material or a conductive aid, or both.

Examples of the negative electrode active material include a carbon-based active material that includes a carbon (C) atom, such as graphite; and a metal-based active material that includes a metallic element, such as an elemental metal or a metal oxide including an element selected from the group consisting of silicon (Si), tin (Sn), antimony (Sb), bismuth (Bi), titanium (Ti), and germanium (Ge). Examples of the binding material include a cellulose-based binding material such as carboxymethylcellulose (CMC), styrene-butadiene rubber (SBR), and the like. Examples of the conductive aid include a carbon material such as fibrous carbon, carbon black (such as acetylene black, Ketjenblack, for example), coke, and activated carbon. Examples of the fibrous carbon include those described above.

Examples of the separator include a porous sheet (such as a film, a nonwoven fabric) made of a resin such as polyethylene, polypropylene, polyester, cellulose, and polyamide. The porous sheet may have a monolayer structure, or may have a multilayer structure of two or more layers.

Examples of the electrolyte include a non-aqueous electrolyte solution, including, for example, a non-aqueous solvent such as an organic solvent containing a supporting salt. Examples of the non-aqueous solvent include ethylene carbonate (EC), propylene carbonate (PC), butylene carbonate (BC), dimethyl carbonate (DMC), ethyl methyl carbonate (EMC), diethyl carbonate (DEC), and the like. Examples of the supporting salt include lithium perchlorate (LiClO₄), lithium hexafluorophosphate (LiPF₆), and the like.

The case is a housing for accommodating the electrode assembly. The case is preferably made of metal, and may be formed of aluminum, aluminum alloy, iron, iron alloy, or the like, for example.

### [Examples]

In the following, the present disclosure will be described in further detail by way of Example(s) and Comparative Example(s).

### [Sample Production]

To a mixed liquid prepared by mixing a dispersion medium and polyvinylidene difluoride (PVdF), inorganic oxide particles specified in Table 1 were added, and stirring was carried out for 120 minutes at a number of revolutions of the stirring blade from 2000 to 6000 rpm and then a conductive carbon material (such as acetylene black) was added, followed by stirring for 30 minutes at a number of revolutions of the stirring blade from 2000 to 6000 rpm to prepare a slurry.

With an applicator that was designed to achieve a coating thickness of 125 µm, the slurry thus prepared was applied to both sides of an aluminum foil, followed by sufficiently drying at a temperature of around 120°C, and thereby samples (1) to (4) having a protective layer formed on the surface of the aluminum foil were produced.

### [Measurement of Specific Surface Area of Inorganic Oxide Particles]

On the surface of the inorganic oxide particles specified in Table 1, liquid nitrogen was made to be adsorbed. By an adsorption method, from the amount of liquid nitrogen adsorbed on the surface of the inorganic oxide particles, the specific surface area was determined. Results are shown in Table 1.

### [Measurement of Slurry Viscosity]

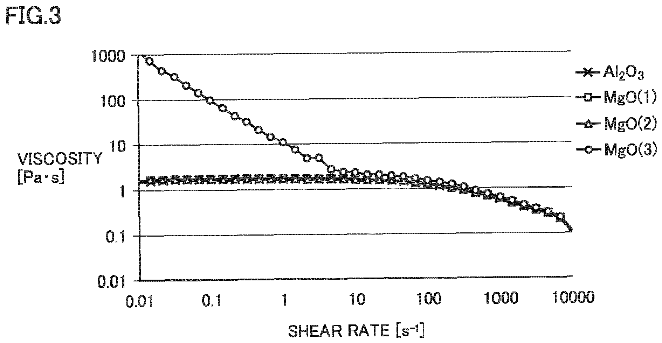

For the slurry prepared for obtaining samples (1) to (4), the viscosity at a temperature from 23 to 28°C and at a shear rate from 0.01 to 10000 s⁻¹ was measured with an MCR rheometer manufactured by Anton Paar. Results are shown in Fig. 3. Referring to Fig. 3, the description of the inorganic oxide particles indicated in the legends section for the plots refers to the types of the inorganic oxide particles included in each slurry (Table 1).

As for the slurry prepared by the above-described procedure using Al₂O₃ having a specific surface area of 3.7 m²/g and 4.7 m²/g as the inorganic oxide particles, the viscosity was measured by the above-described procedure, and it was the same as the viscosity of the slurry used for obtaining sample (4).

The graph of Fig. 3 indicates that the stationary viscosity of the slurry changes depending on the specific surface area of MgO. It also indicates that the stationary viscosity of the slurry prepared with Al₂O₃ does not change depending on the specific surface area of Al₂O₃, unlike the slurry prepared with MgO.

### [Evaluation of Application Properties of Slurry]

The slurry that was easy to spread at the time of application to the surface of the aluminum foil during sample production was rated as "A", and the one difficult to spread was rated as "B". Results are shown in Table 1.

**[Table 1]**

| Sample | | (1) | (2) | (3) | (4) |
|---|---|---|---|---|---|
| Inorganic oxide particles | | | | | |
| | Type | MgO (1) | MgO (2) | MgO (3) | Al₂O₃ |
| | Specific surface area [m²/g] | 1.4 | 4.0 | 7.3 | 4.2 |
| Slurry | | | | | |
| | Evaluation of application properties | A | A | B | A |

### [Evaluation of laser cutting]

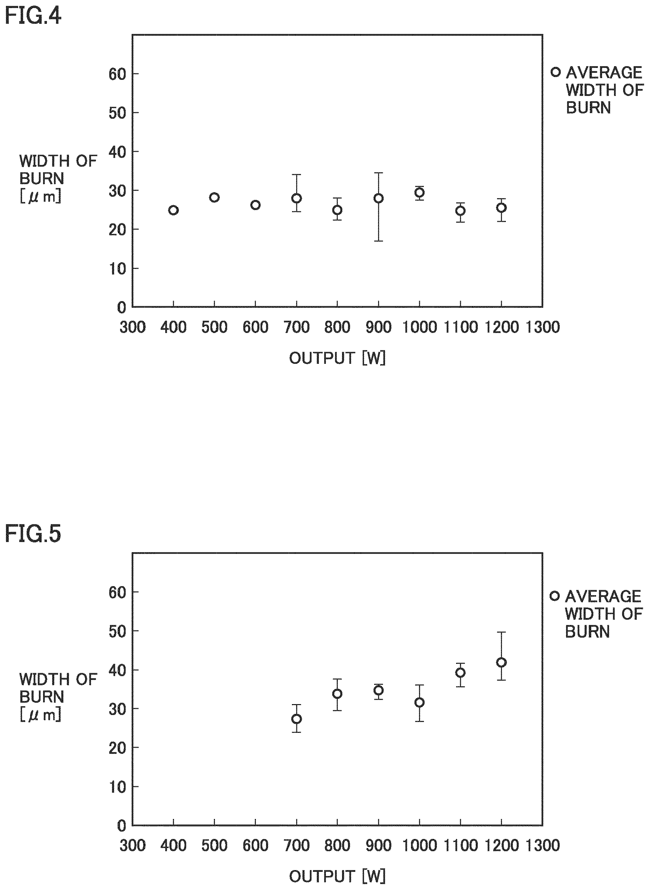

A continuous wave laser was used, at an output within the range of 400 to 1200 W and at a scanning rate of 7660 mm/s or less, to cut the region of sample (2) and sample (4) at which the protective layer was formed. The protective layer at the cut was examined with a microscope, to check if re-melt-adhesion had occurred and to measure the machining width of the cut portion, the width of a burn, and the length of flash (each of which was the size in the direction orthogonal to the cut line in a plan view). The machining width was the width of a portion at which the protective layer was lost due to the cutting of the sample. The width of a burn was the width of discoloration of the protective layer that was caused by the cutting. Results of checking re-melt-adhesion are shown in Table 2, and results of measurement of the width of a burn relative to the laser output at the time of cutting are shown in Fig. 4 and Fig. 5. Fig. 4 is a graph showing the width of a burn of sample (2), and Fig. 5 is a graph showing the width of a burn of sample (4). The plots indicated with white circles in the graph show the average values of the width of a burn. From Fig. 4 and Fig. 5, it is indicated that the width of a burn of sample (2) is smaller than the width of a burn of sample (4). The machining width and the length of flash of both sample (2) and sample (4) were within the range tolerable as the cutting qualities of a positive electrode plate.

**[Table 2]**

| Laser output [W] | Re-melt-adhesion | |
|---|---|---|
| | Sample (2) | Sample (4) |
| 400 | None | Present |
| 500 | None | Present |
| 600 | None | Present |
| 700 | None | None |
| 800 | None | None |
| 900 | None | None |
| 1000 | None | None |
| 1100 | None | None |
| 1200 | None | None |

Although the embodiments of the present disclosure have been described, the embodiments disclosed herein are illustrative and non-restrictive in any respect. The scope of the present disclosure is defined by the terms of the claims, and is intended to encompass any modifications within the meaning and the scope equivalent to the terms of the claims.

## Claims

1. A positive electrode plate (10) comprising:
a metal foil (11);
an active material layer (12) including a positive electrode active material, on a surface of the metal foil (11); and
a protective layer (13) on the surface of the metal foil (11), wherein
the active material layer (12) and the protective layer (13) are adjacent to each other in a plan view of the positive electrode plate (10), and
the protective layer (13) includes a magnesia having a specific surface area of 5.0 m²/g or less.

2. The positive electrode plate (10) according to claim 1, wherein the magnesia included in the protective layer (13) has a specific surface area of 4.0 m²/g or less.

3. The positive electrode plate (10) according to claim 1, wherein the protective layer (13) includes the magnesia in an amount from 15 weight% to 25 weight% relative to a total amount of the protective layer (13).

4. The positive electrode plate (10) according to claim 1, wherein the protective layer (13) further includes a binder.

5. The positive electrode plate (10) according to claim 1, wherein the protective layer (13) further includes a conductive carbon material.

6. A non-aqueous electrolyte secondary battery comprising the positive electrode plate (10) according to any one of claims 1 to 5.

7. A method of producing a positive electrode plate (10) in which method the positive electrode plate (10) is obtained from a positive electrode raw sheet (20), wherein
the positive electrode raw sheet (20) comprises a metal foil (11), an active material layer (12) including a positive electrode active material on a surface of the metal foil (11), and a protective layer (13) on the surface of the metal foil (11),
the active material layer (12) and the protective layer (13) are adjacent to each other in a plan view of the positive electrode raw sheet (20),
the method comprises a step (S1) that involves preparing the positive electrode raw sheet (20),
the step (S1) includes applying a slurry intended for forming the protective layer (13), to the surface of the metal foil (11), and
the slurry includes a magnesia having a specific surface area of 5.0 m²/g or less.

8. The method of producing a positive electrode plate (10) according to claim 7, wherein the magnesia included in the slurry has a specific surface area of 4.0 m²/g or less.

9. The method of producing a positive electrode plate (10) according to claim 7, wherein
the method further comprises a step (S2) that involves cutting the positive electrode raw sheet (20) with a laser, and
the step (S2) includes cutting the protective layer (13).

10. The method of producing a positive electrode plate (10) according to claim 9, wherein
the positive electrode plate (10) has an electrode tab (14), and
the step (S2) includes forming the electrode tab (14) by cutting the positive electrode raw sheet (20) with the laser.

11. The method of producing a positive electrode plate (10) according to claim 9 or 10, wherein the laser is a continuous wave laser.

12. The method of producing a positive electrode plate (10) according to claim 11, wherein an output of the continuous wave laser in the step (S2) is from 400 W to 1200 W.

13. The method of producing a positive electrode plate (10) according to claim 11, wherein a scanning rate of the continuous wave laser in the step (S2) is 7660 mm/second or less.
